# EUROPEAN PATENT SPECIFICATION

(11) **EP 2 571 205 B1**
(45) Date of publication and mention of the grant of the patent: **09.05.2018**
(21) Application number: 12184178.7
(22) Date of filing: 13.09.2012
(51) Int. Cl.: H04L 12/58, H04L 12/18

(54) **A method and device for distributing contributions for users connected over at least one communication network**
Verfahren und Vorrichtung zur Verteilung der Beiträge von über mindestens ein Kommunikationsnetzwerk verbundenen Nutzern
Procédé et dispositif pour distribuer des contributions pour utilisateurs connectés sur au moins un réseau de communication

(30) Priority: 13.09.2011 FR 1158147
(43) Date of publication of application: 20.03.2013
(73) Proprietor: Alcatel Lucent, 91620 Nozay (FR)
(72) Inventor: Cabasse, Gilbert, 29228 BREST (FR); Bonnaud, Fabrice, 29806 BREST (FR)
(74) Representative: Berthier, Karine

(56) References cited:
- EP-A2- 1 209 849
- US-A1- 2002 023 132
- US-A1- 2005 198 031

## Description

The present invention pertains to the distribution of contributions for users connected over at least one communication network.

It generally applies in the field of communication networks, and more particularly in the field of multimedia conferences, instant messaging services, or discussions on social networks.

Generally speaking, a social network enables users to enter personal information and to interact with other users. The information that may be made available to the network pertain, for example, to marital status, education, and fields of interest. This information makes it possible to find users who share the same interests Those users may form groups and invite other people to them. Interactions between members include sharing correspondence, contributions to discussion pages, and multimedia documents.

Here, the term discussion or conversation space refers to a contribution-sharing device. (Non-limiting) examples of discussion spaces are audio conference bridges, audio and video conference bridges, and discussion forums (chat rooms).

Currently, in this sort of social network, users' contributions in an ongoing discussion space are distributed to all other participants who have unilaterally agreed to participate in that discussion with. This unilateral acceptance may be performed by one of the group's participants, by an administrator, or by automatic selection criteria depending on the participant's profile. The list of participants in the group is the same from each participant's viewpoint, meaning that if a participant is added to the group, his or her contributions are received by all other participants already present within the group, and likewise the newcomer receives everyone else's contributions. However, this distribution to all of the group's participants constitutes a shortcoming in that the group might accept a high number of participants, which leads to noise, and in that some users on said list may be completely unknown by other participants, undesired, or even uncouth or malicious by a participant's own criteria. Likewise, some users on that list may want to send their contributions to a current discussion group only to a chosen fraction of that group. As a result, such a general distribution of contributions within a list of friends on a current discussion page is not entirely satisfactory in terms of privacy and in choosing the recipients from within a list of friends.
European Patent Publication EP-A2-1 209 849 describes a device adapted for persistent chat sessions, with similar shortcomings.
The present invention remedies these shortcomings.
It pertains to a contribution-distribution device for users connected over at least one communication network.
According to one general definition of the invention, the distribution device comprises a distribution module for distributing a contribution by a user from a group of users in a current conversation space to another user of said group, provided that the user receiving said group's contribution is invited by the user who sent said group's contribution in accordance with a chosen invite mechanism, and that said receiving user accepts the distribution of the contribution from said sending user in accordance with a chosen acceptance mechanism, said distribution module comprises a processing mechanism capable of identifying that the content of a contribution is a question, or a reply to an earlier contribution, and if a question is received without the corresponding reply or only one reply, the distribution module further comprising distribution rules for receiving the question and the corresponding reply, or to receive neither the question, nor the associated reply.
Thus, on a current discussion page, the users' contributions for the current discussion page are selectively distributed, meaning that they are routed to the other users of the same group provided that the receiver is invited by the sender of the contribution and that said receiver accepts the distribution of the contribution. The result is an improvement in privacy and the choice of contribution recipients on a current discussion page, compared to earlier solutions.
According to one embodiment, the distribution of the contribution is or is not reciprocal between said contribution's sending user and receiving user.
According to another embodiment, the invite mechanism is implicit or explicit.
According to yet another embodiment, the acceptance mechanism is implicit or explicit.

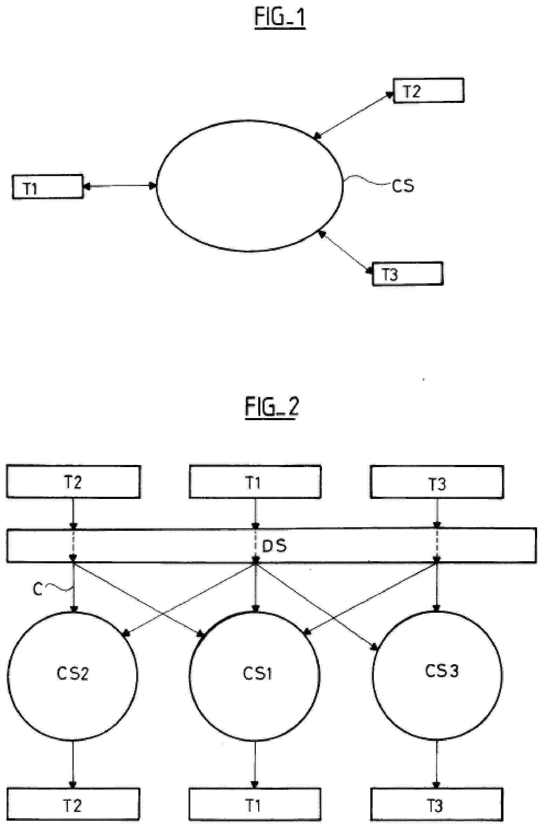

Another object of the present invention is a method for distributing contributions for users connected over at least one communication network, comprising the step of distributing a contribution by a user from a group of users in a current conversation space to another user of said group, provided that the user receiving said group's contribution is invited by the user who sent said group's contribution in accordance with a chosen invite mechanism, and that said receiving user accepts the distribution of the contribution from said sending user in accordance with a chosen acceptance mechanism; the step of identifying that the content of a contribution is a question, or a reply to an earlier contribution, and if a question is received without the corresponding reply or only one reply, wherein distribution rules are provided for receiving the question and the corresponding reply, or to receive neither the question, nor the associated reply.
In practice, the contributions belong to the group formed by multimedia conferences, instant messaging services, and discussions on social networks.
Other characteristics and advantages of the invention will become apparent upon examining the detailed description below, and the attached drawings, wherein:
- **Figure 1** schematically depicts a conversation space according to the prior art, and
- **Figure 2** schematically depicts a conversation space according to the invention.
With reference to **Figure 1****,** a user T1 chooses to create a conference, and invites users T2 and T3 according to an email-based or similar invite mechanism. If the users T2 and T3 positively respond to the invite from the user T1, the users enter the conference and the users T1, T2 and T3 can all converse with one another within the same conversation space CS thereby created.
With reference to **Figure 2****,** a user T1 chooses to create a conference, and invites the users T2 and T3 according to an invite mechanism that shall be described in greater detail below. If the users T2 and T3 positively respond to the invite from the user T1, then a system DS that will be described in detail below will create three individualized conversation spaces in CS1, CS2 and CS3.

It should be noted that, generally speaking, a conversation space has an identifier; this may be a subject (a work topic, a sporting event, etc.) or any other means of establishing one discussion space from another. In order to simplify the description in the following paragraphs, it is assumed that the system DS and the spaces CSi, as well as the invites, are all linked by the same conversation space identifier. For example, the system may create a specific DS for each discussion identifier, tasked with receiving each participant's contributions for that particular topic. Likewise, a user Ti sees one space CSi for each discussion topic in which he or she is participating. Likewise, an invite may be specific to a discussion space, as a participant may want to see a participant's contributions for a given subject, but not want to receive that same participant's contributions on another subject.

For example, each arrow here represents a contribution C by a user Ti during a current discussion page over a social network. A contribution may be a written message, an audio message, or a video message. The contribution may also be that of a participant in a multimedia conference or during instant messaging.

The system DS (Distribution System) is a system that distributes each user's contributions C to the various conversation spaces CS thereby created based on an invite mechanism that is described later on.

CS1 is the conversation space managed by the user T1, and which is seen/heard by the user T1, CS2 in the conversation space managed by the user T2, and which is seen/heard by the user T2, and CS3 is the conversation space managed by the user T3, and which is seen/heard by the user T3.

Depending on trade practices in software development, the spaces CS1, CS2 and CS3 may be implemented as distinct entities, or as logical views of a single entity CS, the logical view CSi being constructed based on invites accepted between Ti and the other participants in the space CS

The distribution system DS is a server system. The system DS is coupled to the conference device, instant messaging service, or discussion over the communication network, for example a social network.

The distribution of contributions C to users Ti is controlled by the distribution system DS according to an invite and acceptance mechanism that shall be described in detail below.

For example, the invite and acceptance mechanism is defined in such a way that the user T2 does not receive contributions from the user T3 and the user T3 does not receive contributions from the user T2. Such targeted, private distribution is obtained, for example, by the fact that no invitation between the users T2 and T3 was accepted by either of the users T2 and T3.

The distribution system DS has an entirely separate operation from the mechanisms of the discussion spaces of the prior art as described with reference to Figure 1 (chat room, audio and/or video conference bridge). Rather, it is based on invites and acceptances between the users regarding a discussion initiated by one of the users that the conversation spaces are created and the contributions are exchanged between the other users regarding that current discussion within those individualized and distinct conversation spaces thereby created.

The invite/acceptance mechanism may have multiple implementations, and the distribution system is adapted accordingly with those different implementations. The different implementations may coexist, for example, a user may specify that he or she wants to use a particular implementation with some correspondents on his or her contact list, and another implementation with other correspondents.

According to a first implementation, the invite and acceptance are explicit.

Here, the user T1 chooses the users T2 and T3 from a list of contacts. The users T2 and T3 receive an invite (email, indicator in any application (smartphone, etc.). The user T2 accepts the invite by performing an explicit action with respect to the message. Examples: clicking on a button, a hyperlink, calling a telephone number.

In practice, the distribution system DS processes the explicit invites/acceptances by saving, for each user Ti, the list of users Tj to which Ti has sent an invite. When Tj performs the action to accept Ti's invite, the system saves the acceptance.

Optionally, the system may offer Ti and Tj the option to cancel his or her action, for example Ti may cancel his or her invite, and Tj may cancel his or her acceptance; in both of these cases, the link between Ti and Tj will be broken.

Next, when Ti makes a contribution within the conversation space, that contribution is received by DS, then made visible or audible by the participants Tj of the same discussion space for whom there exists an unaccepted invite between Ti and Ti.
Note that the system may, for the sake of convenience from the end users' viewpoint, accept symmetrical operation, i.e. the fact that Ti accepts an invite sent by T1 means that T1 had accepted an invite from Ti, and that therefore if an invite is accepted in one direction, then regardless of that direction, T1 receives Ti's contributions, and Ti receives T1's contributions.

According to a second limitation, the invite is explicit and acceptance is implicit.
Here, the user T1 chooses the users T2 and T3 from a list of contacts. Any system (directory, social network database) has saved that the user T2 still accepts invites from the user T1. At the desired time, an interface opens on the terminal of the user T1 to allow the interaction.

In practice, the distribution system DS processes the invites/acceptances as follows: When T1 sends the invite to Ti, the invite is received by DS, DS checks whether, in Ti's profile, it is specified that Ti always accepts T1's contributions.
If this is the case, the invite is therefore considered accepted. If Ti already participates in the conversation space, then his or her CSi will then receive T1's contributions. If, on the other hand, Ti is not active on the subject initiated by T1, he or she will be notified of the fact that T1 desires his or her participation. If Ti has specified that he or she does not automatically accept T1's invites, then the system may apply the explicit acceptance mechanism described above.

According to a third implementation, the invite is implicit and acceptance is explicit.

For example, the user T1 turns on a television set and watches a soccer game. This action is detected by the distribution system, and sends an invite to all of the user T1's contacts (or to a subset of predefined contacts, for example a "soccer" group that includes some of his or her Facebook contacts).

If warranted, the user T1 may choose to have the invite only be sent to contacts who are already watching the same channel. Those who wish to share the game with the user T1 accept the invite explicitly, as in the first implementation.

According to a fourth implementation, the invite and acceptance are both implicit.

For example, the user T1 has just purchased the book and marks him/herself as a "Fan" of the author's discussion page on a social network. He or she creates a conversation space CS this topic is the author. For example, the identifier of the CS1's topic is the identifier of the social network's discussion page. The user T2 does the same as the user T1. Because the users T1 and T2 are also "friends" within the social network, there is implicit acceptance, and then the conversation space CS1 receives the contributions of the user T2, and the conversation space CS2 receives the contributions of the user T1.

According to a fifth implementation, the invite is sent via a third party.

In one variant, the user T1 may be granted expanded powers by the distribution system DS, and the users T2 and T3 may converse directly without needing to accept the invite. On the other hand, the users T2 or T3 remain in control of their conversation spaces CS1 and CS2 and, for example, the user T2 make later choose to no longer hear the user T3

According to one variant, the user T1 chooses to make public the list of people with which he or she is having a conversation in his or her space CS1. The user T2 may thereby see that the user T1 is also speaking with the user T3, and the user T2 can then launch an invite to the user T3.

With reference to Figure 2, the user T1 sees the contributions of the users T2 and T3, the user T2 sees the contributions of the users T1, but not the contributions of the user T3. As it stands, such a situation poses a problem for the user T2 whenever a contribution from the user T1 is an answer to a question contribution from the user T3, because the user T2 receives the user T1's answer without having access to the user T3's question.

To settle this problem, the system DS detects the contributions that are questions. This detection may be automatic (a question mark present in a text message, voice tone or syntactical analysis in a voice message, etc.) or manual, meaning that the author of the contribution specifies that it is a question intended for his or her audience.

Likewise, the system DS comprises means for recognizing a contribution that is an answer to an already-asked question, either by automatic means, or by a specific action from the contributor.

From there, the user T1 or T3 or an administrator may specify how the system DS must process user T1's answers to user T3's question. For example, the system does not distribute the answers to questions that could not be viewed. In one variant, the system transmits the user T3's question to the user T2. In the context of a discussion forum (chat), the transmission may be carried out by copying a text message. In the context of an audio conference, the transmission of the question may be carried out by redistributing the saved question or by displaying the question in text form, after the saved message has been converted by a speech-to-text solution.

In one variant, the system may also tell that a question is intended for a specific participant, either automatically or in response to a specific action from the contributor. For example, the system is aware that a contribution from the user T1 is a question intended for the user T3. Symmetrically to the previous case, the user T1 or T3 or an administrator may specify that the system not transmit the question to the user T2 or to transmit the question and the user T3's answer.

## Claims

1. A device for distributing contributions for users (Ti) connected over at least one communication network, **characterized in that** it comprises a distribution module (DS) for distributing a contribution by a user (T2) from a group of users (T1, T2, T3) in a current conversation space to another user (T3) of said group, provided that the user (T3) receiving said group's contribution is invited by the user (T2) who sent said group's contribution in accordance with a chosen invite mechanism, and that said receiving user (T3) accepts the distribution of the contribution from said sending user in accordance with a chosen acceptance mechanism, said distribution module comprising a processing mechanism capable of identifying that the content of a contribution is a question, or a reply to an earlier contribution, and if a question is received without the corresponding reply or only one reply is received, the distribution module (DS) further comprising distribution rules for receiving the question and the corresponding reply, or to receive neither the question, nor the associated reply.

2. A device according to claim 1, wherein the distribution of the contribution is or is not reciprocal between said contribution's sending user and receiving user.

3. A device according to claim 1 or claim 2, wherein the invite mechanism is implicit or explicit.

4. A device according to claim 1 or claim 2, wherein the acceptance mechanism is implicit or explicit.

5. A method for distributing contributions for users (Ti) connected over at least one communication network, **characterized in that** it comprises:
- the step of distributing a contribution by a user (T2) from a group of users (T1, T2, T3) in a current conversation space to another user (T3) of said group, provided that the user (T3) receiving said group's contribution is invited by the user (T2) who sent said group's contribution in accordance with a chosen invite mechanism, and that said receiving user (T3) accepts the distribution of the contribution from said sending user in accordance with a chosen acceptance mechanism;
- the step of identifying that the content of a contribution is a question, or a reply to an earlier contribution, and if a question is received without the corresponding reply or only one reply is received, wherein distribution rules are provided for receiving the question and the corresponding reply, or to receive neither the question, nor the associated reply.

6. A method according to claim 5, wherein the distribution of the contribution is or is not reciprocal between said contribution's sending user and receiving user.

7. A method according to claim 5, wherein the invite is implicit or explicit.

8. A method according to claim 5, wherein the acceptance is implicit or explicit.

9. A method according to any one of the claims 5 to 8, wherein the contributions belong to the group formed by multimedia conferences, instant messaging services, and discussions on social networks.

## Patentansprüche

1. Gerät für das Verteilen von Beiträgen von Nutzern (Ti), die über mindestens ein Kommunikationsnetzwerk verbunden sind, **dadurch gekennzeichnet, dass** es ein Verteilungsmodul (DS) umfasst zum Verteilen eines Beitrags durch einen Nutzer (T2) von einer Gruppe von Nutzern (T1, T2, T3) in einem aktuellen Konversationsraum auf einen anderen Nutzer (T3) besagter Gruppe, vorausgesetzt, dass der Nutzer (T3), der besagten Beitrag der Gruppe empfängt, von dem Nutzer (T2) eingeladen worden ist, der besagten Beitrag der Gruppe in Einklang mit einem gewählten Einlademechanismus gesendet hat und dass besagter empfangender Nutzer (T3) die Verteilung des Beitrags von besagtem sendenden Nutzer akzeptiert in Einklang mit einem ausgewählten Annahmemechanismus, wobei besagtes Verteilungsmodul einen Verarbeitungsmechanismus umfasst, der in der Lage ist, zu identifizieren, ob der Inhalt eines Beitrags eine Frage ist oder eine Antwort auf einen früheren Beitrag, und wenn eine Frage ohne die entsprechende Antwort empfangen wird oder nur eine Antwort erhalten wird, das Verteilungsmodul (DS) weiterhin umfasst Verteilungsregeln zum Empfangen der Frage und der entsprechenden Antwort oder zum Empfangen weder der Frage noch der damit verbundenen Antwort.

2. Gerät nach Anspruch 1, wobei die Verteilung der Beiträge reziprok ist oder nicht zwischen besagtem den Beitrag sendenden Nutzer und dem empfangenden Nutzer.

3. Gerät nach Anspruch 1 oder Anspruch 2, wobei der Einlademechanismus implizit oder explizit ist.

4. Gerät nach Anspruch 1 oder Anspruch 2, wobei der Annahmemechanismus implizit oder explizit ist.

5. Verfahren für das Verteilen der Beiträge für Nutzer (Ti), die über mindestens ein Kommunikationsnetzwerk verbunden sind, **dadurch gekennzeichnet, dass** es umfasst:
- den Schritt des Verteilens eines Beitrags durch einen Nutzer (T2) von einer Gruppe von Nutzern (T1, T2, T3) in einem aktuellen Konversationsraum auf einen anderen Nutzer (T3) besagter Gruppe, vorausgesetzt, dass der Nutzer (T3), der den besagten Beitrag der Gruppe empfängt, von dem Nutzer (T2) eingeladen worden ist, der den besagten Beitrag der Gruppe gesendet hat in Einklang mit einem ausgewählten Einlademechanismus und dass besagter empfangender Nutzer (T3) die Verteilung des Beitrags von besagtem sendenden Nutzer akzeptiert in Einklang mit einem ausgewählten Annahmemechanismus;
- den Schritt des Identifizierens, dass der Inhalt eines Beitrags eines Frage ist oder eine Antwort auf einen früheren Beitrag, und wenn eine Frage ohne die entsprechende Antwort empfangen wird oder nur eine Antwort erhalten wird, wobei die Verteilungsregeln bereitgestellt werden für das Empfangen der Frage und der entsprechenden Antwort oder zum Empfangen weder der Frage noch der damit verbundenen Antwort.

6. Verfahren nach Anspruch 5, wobei die Verteilung des Beitrags reziprok ist oder nicht zwischen besagtem den Beitrag sendenden Nutzer und dem empfangenden Nutzer.

7. Verfahren nach Anspruch 5, wobei die Einladung implizit oder explizit ist.

8. Verfahren nach Anspruch 5, wobei die Annahme implizit oder explizit ist.

9. Verfahren nach einem beliebigen der Ansprüche 5 bis 8, wobei die Beiträge zu der Gruppe gehören, welche durch Multimedia-Konferenzen, Instant Messaging Dienste und Diskussionen in sozialen Netzwerken gebildet wird.

## Revendications

1. Dispositif de distribution de contributions pour des utilisateurs (Ti) connectés à travers au moins un réseau de communication, **caractérisé en ce qu'**il comprend un module de distribution (DS) pour distribuer une contribution d'un utilisateur (T2) d'un groupe d'utilisateurs (T1, T2, T3) d'un espace de conversation en cours vers un autre utilisateur (T3) dudit groupe à la condition que l'utilisateur (T3) récepteur de la contribution dudit groupe soit invité par l'utilisateur émetteur (T2) de la contribution dudit groupe selon un mécanisme d'invitation choisi et que ledit utilisateur récepteur (T3) accepte la distribution de la contribution en provenance dudit utilisateur émetteur selon un mécanisme d'acceptation choisi, ledit module de distribution comprenant un mécanisme de traitement apte à identifier que le contenu d'une contribution est une question, ou bien une réponse à une contribution précédente, et en cas de réception d'une question sans la réponse associée ou seulement d'une réponse, ledit module de distribution (DS) comprenant en outre des règles de distribution pour recevoir la question et la réponse associée, ou bien pour ne recevoir ni la question, ni la réponse associée.

2. Dispositif selon la revendication 1, dans lequel la distribution de la contribution est réciproque ou non entre l'utilisateur émetteur et l'utilisateur récepteur de ladite contribution.

3. Dispositif selon la revendication 1 ou la revendication 2, dans lequel le mécanisme d'invitation est implicite ou explicite.

4. Dispositif selon la revendication 1 ou la revendication 2, dans lequel le mécanisme d'acceptation est implicite ou explicite.

5. Procédé de distribution de contributions pour des utilisateurs (Ti) connectés à travers au moins un réseau de communication, **caractérisé en ce qu'**il comprend :
- l'étape de distribuer une contribution d'un utilisateur (T2) d'un groupe d'utilisateurs (T1, T2, T3) d'un espace de conversation en cours vers un autre utilisateur (T3) dudit groupe à la condition que l'utilisateur (T3) récepteur de la contribution dudit groupe soit invité par l'utilisateur émetteur (T2) de la contribution dudit groupe selon un mécanisme d'invitation choisi et que ledit utilisateur récepteur (T3) accepte la distribution de la contribution en provenance dudit utilisateur émetteur selon un mécanisme d'acceptation choisi ;
- l'étape d'identifier que le contenu d'une contribution est une question, ou bien une réponse à une contribution précédente, et en cas de réception d'une question sans la réponse associée ou seulement d'une réponse, dans lequel des règles de distribution sont prévues pour recevoir la question et la réponse associée, ou bien pour ne recevoir ni la question, ni la réponse associée.

6. Procédé selon la revendication 5, dans lequel la distribution de la contribution est réciproque ou non entre l'utilisateur émetteur et l'utilisateur récepteur de ladite contribution.

7. Procédé selon la revendication 5, dans lequel l'invitation est implicite ou explicite.

8. Procédé selon la revendication 5 dans lequel l'acceptation est implicite ou explicite.

9. Procédé selon l'une quelconque des revendications 5 à 8, dans lequel les contributions appartiennent au groupe formé par des conférences multimédia, des messageries instantanées; des discussions sur réseau social.
